# EUROPEAN PATENT APPLICATION

(11) **EP 2 535 630 A1**
(43) Date of publication of application: **19.12.2012**
(21) Application number: 11305759.0
(22) Date of filing: 17.06.2011
(51) Int. Cl.: F16L 37/107, F16L 37/373, B65G 69/18, F16K 1/18

(54) **Half butterfly valves quick-release coupling**

(71) Applicant: Eaton Hydraulics SAS, 74100 Annemasse (FR)
(72) Inventor: Lafond, Sébastien, 74140 St-Cergues (FR); Gerin, Guillaume, 74100 Etrembieres (FR); Brand, Bernard, 74100 Vetraz-Monthoux (FR); Buffet, Jerome, 74000 Annecy (FR)
(74) Representative: Pautex Schneider, Nicole Véronique

(57) **Abstract**

A coupling device (1) made of a first portion (2) comprising a substantially cylindrical plug body (2a) and a first half butterfly valve (2b), a second portion (3) comprising a substantially cylindrical socket body (3a), a activation sleeve (3c) movably attached to the outer surface of the socket body (3a) and a second half butterfly valve (3b), adapted to be detachably coupled with each other. The coupling device (1) also comprises a coupling means (4) for coupling the first and the second portions (2, 3) together, and a driving system (5) for pivoting the two coupled half-butterfly valves (2b, 3b), said coupling means (4) comprising a first locking position (41) and a second, valve-open position beyond said first, locking position (41), and said driving system (5) pivots the two coupled half-butterfly valves (2b, 3b) upon rotation of said activation sleeve (3c) beyond said first locking position (41).

## Description

### Technical Field

The present invention relates to a coupling device, and more particularly to a quick-release coupling device for any media, for example, a hose to a vessel, providing an excellent flow upon connection and no fluid loss upon disconnection.

### Background art

In recent years, various coupling devices have been provided for coupling to storage and/or transport means.

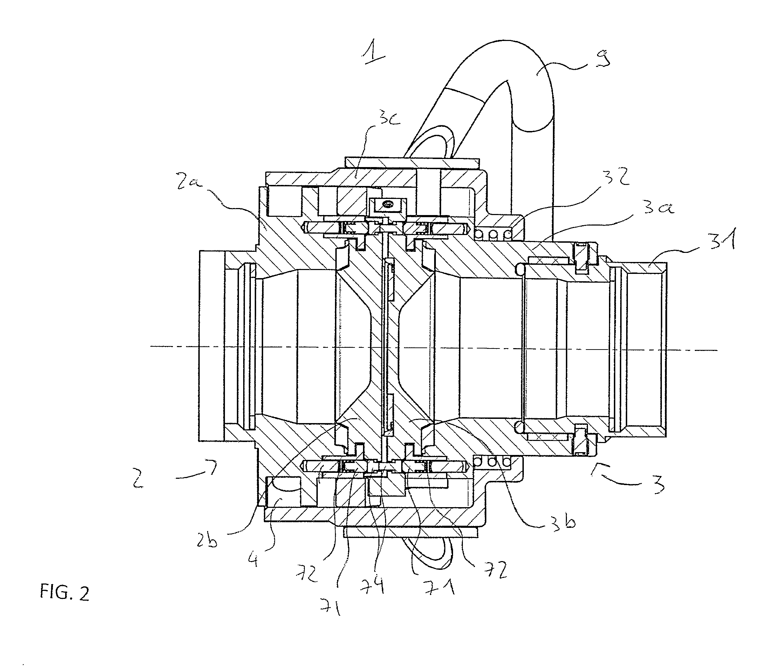

Published European patent application No. 1 213 244 A1 describes a dual-valve coupling device comprising a first coupling portion with a first half-butterfly valve and a second coupling portion with a second half-butterfly valve according to the preamble of present claim 1. When the two coupling portions are coupled, centering pins provided on one of the coupling portion are locked by a rotatably mounted closure ring in the manner of a bayonette and the two half-butterfly valves are coupled. Thereafter, in order to open the two coupled half-butterfly valves a user has to rotate a second driving means (30, 31, 32). Therefore, in order to use this coupling device, the user needs to first lock the two coupling portions with a first driving means, and then to open the two coupled half-butterfly valves with a second driving means. This leads to a complicated use of the coupling device since it requires two successive operations. Published US patent application US 2004/0094211 describes a coupling device for coupling two storage means comprising two coupling portions 10, 100 and 100' wherein the first coupling portion comprising one half-butterfly valve is to be sandwiched/embraced by the two second coupling portion 100, 100'. Upon coupling, first the first coupling portion is sandwiched by the two second coupling portion 100, 100' and then the user turns a drive shaft 301 engaging, via a plug, a disk 304 turning a connecting ring 2 locking the coupling portion. A further rotation of the drive shaft effects that the drive shaft engages, via said plug, a second disk 314 for rotating the two coupled half-butterfly valves. Therefore, this coupling device provides a system for locking two coupling portions and opening the two coupled half-butterfly valves with the same driving means, however, the locking/opening mechanism of US 2004/0094211 requires a complicated gear mechanism and that the first coupling portion be embraced by the two second coupling portion and can therefore not be used as a quick-release coupling mechanism. Moreover, the complicated mechanism requires a high precision work and high costs. Finally, as shown in figure 2, the complicated mechanism located inside and outside the coupling portion walls increases the coupling device dimension while reducing the opening diameter.

In view of the above, the present inventors have worked to realize a coupling device, preferably a quick-release coupling device, providing an excellent flow with lowest possible pressure drop and no retention zones. Also another object of the invention is to provide a coupling device with no fluid loss upon disconnection and no air or other contamination upon connection. Finally, a further object of the present invention is to provide a coupling device easy to connect and to operate, so that time can be saved during operations due to quickness for coupling and transferring the fluid.

### Summary of the invention

The above problems are solved by a coupling device according to the present invention as claimed in claim 1.

More particularly, the present invention relates to a coupling device made of a first coupling portion and a second coupling portion adapted to be detachably coupled with each other, wherein the first coupling portion comprises a substantially cylindrical plug body and a first half butterfly valve and the second coupling portion comprises a substantially cylindrical socket body, an activation sleeve movably attached to the outer surface of the socket body, and a second half butterfly valve. The coupling device further comprises a coupling means, for coupling the first and the second coupling portions together, including at least two cam followers on one of the substantially cylindrical plug body and the activation sleeve, and a cam groove on the other one of the substantially cylindrical plug body and the activation sleeve, wherein the two portions are coupled by axially inserting the cam followers into the cam groove and then rotating the activation sleeve in a circumferential direction to a first, locking position, and a driving system for pivoting the coupled two-half valves. The coupling device is characterized in that the coupling means further comprises a second, valve-open position beyond the first, locking position, and the driving system pivots the coupled two-half valves upon rotation of the activation sleeve beyond the first locking position.

In a preferred embodiment of the present invention, the driving system comprises a lever attached to the second half butterfly valve and a pin attached to the lever guided by a pin-moving groove provided on an inner surface of the activation sleeve such that upon rotation of the activation sleeve beyond the first locking position, the pin is guided by the pin-moving groove so as to turn the lever and pivot the two half-valves into an open position.

In another preferred embodiment of the present invention, each half butterfly valve comprises a locking mechanism comprising a locking pin urged by a locking spring in a locking hole of the half butterfly valve into a position in which each of said half-butterfly valves sealingly closes the respective one of said first and second coupling portions, wherein when coupled, each half butterfly valve is unlocked by a respective valve pin urging the locking pin against the spring force out of the locking hole.

In still another preferred embodiment of the present invention, the at least two cam followers are located on an inner surface of the activation sleeve and the cam groove is provided on the outer surface of the plug body.

In still another preferred embodiment of the present invention, the activation sleeve is urged away from the first portion by a biasing spring.

In a further preferred embodiment of the present invention, when the first and second portion of the coupling device are detached, the biasing spring urges the activation sleeve toward a recess provided in the socket body such that it cannot be rotated in a circumferential direction.

In still another preferred embodiment of the present invention, the coupling device is a quick-release coupling device capable of being operated with a single movement.

In still another preferred embodiment of the present invention, the socket body comprises a connection adapter on its rear side, capable of rotating freely, in a manner sealed to the socket body.

In still another preferred embodiment of the present invention, the connection adapter is a hose connection adapter.

In still another preferred embodiment of the present invention, one of the substantially cylindrical plug and socket bodies comprises at least one axial hole and the other of the cylindrical socket and plug bodies comprises at least one axial pin cooperating with the at least one axial hole to correctly angularly position the first and second portions upon rotation.

In still another preferred embodiment of the present invention, the cam groove, beyond the locking position, comprises a sloped cam surface so as to increase the closing pressure between the two portions upon rotation.

In still another preferred embodiment of the present invention, the coupling device further comprises further comprising at least a first seal 81, made of a cylindrical part 81a and a spherical part 81b, provided between the first half butterfly valve 2b and the plug body 2a, a second seal 82, made of a cylindrical part 82a and a spherical part 82b, provided between the second half butterfly valve 3b and the socket body 3a, and a third circle-shaped seal 83 is provided along the periphery of one of the two half butterfly valves 2b, 3b, such that upon coupling of the two half-butterfly valves, their external faces are hermetically separated from the fluid passage.

In still another preferred embodiment of the present invention, the coupling device further comprises handles on the activation sleeve.

In still another preferred embodiment of the present invention, when fully opened, the two coupled half-butterfly valves are pivoted at 90° compared to their closed position.

In still another preferred embodiment of the present invention, the first and second half butterfly valves comprise a semicircular flange coaxially located around an axis of pivotation of the half butterfly valves, which is slidably inserted in two opposite semicircular grooves provided in the inner surface of the substantially cylindrical socket and plug bodies. As a result, the said two opposite semicircular grooves allow only the rotation of the half butterfly valves around the said axis of pivotation.

### Description of the drawings

Figure 1 shows a sectional side view of a coupling device according to the present invention in a detached state.
Figure 2 shows a sectional side view of the coupling device according to the present invention in a locked status with closed half-butterfly valves.
Figure 3 shows a sectional side view of the coupling device according to the present invention in a locked status with opened valves.
Figures 4A-4C show a perspective view of the two half butterfly valves and their seals according to an embodiment of the present invention.
Figure 4D shows a partially sectional top view of a coupling device according to the present invention in a detached state.
Figure 5A shows a perspective view of the activation sleeve of the coupling device of the present invention, illustrating the pin-moving groove.
Figure 5B shows a schematic view of the pin-moving groove provided in the activation sleeve of the coupling device of the present invention.
Figures 6A-6C show a perspective view of the coupling device according to the present invention in a detached state, a locked state and an opened valve state, respectively.

### Best mode for carrying out the invention

A first embodiment will be described below with reference to the drawings. It has to be noted that the drawings have an illustrative purpose only and are not intended to limit the present invention to their disclosed features. On the other hand, the drawings may lack representing some features in order to enhance the clarity thereof.

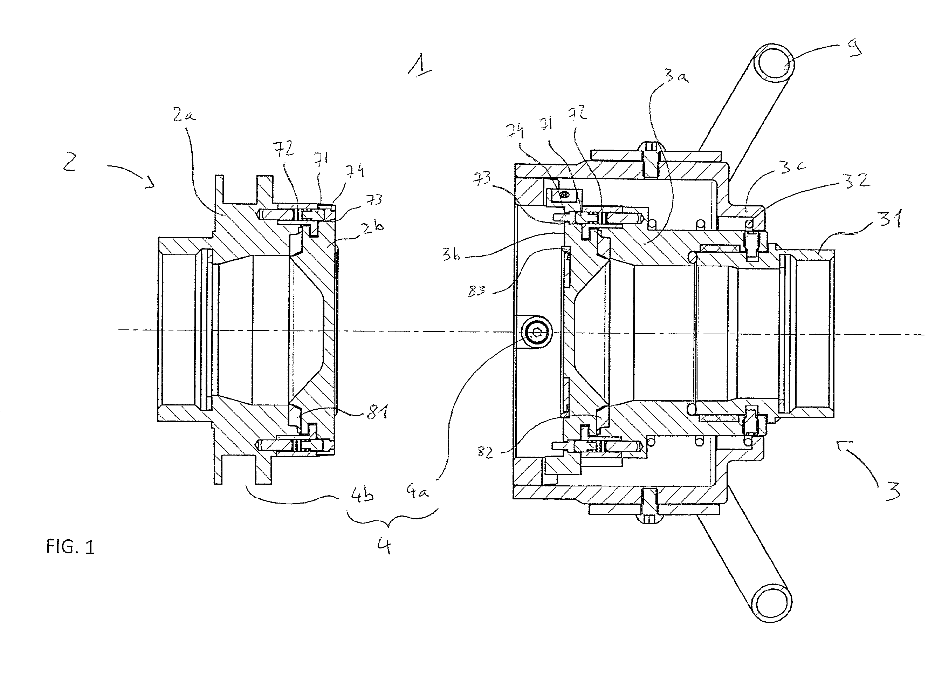

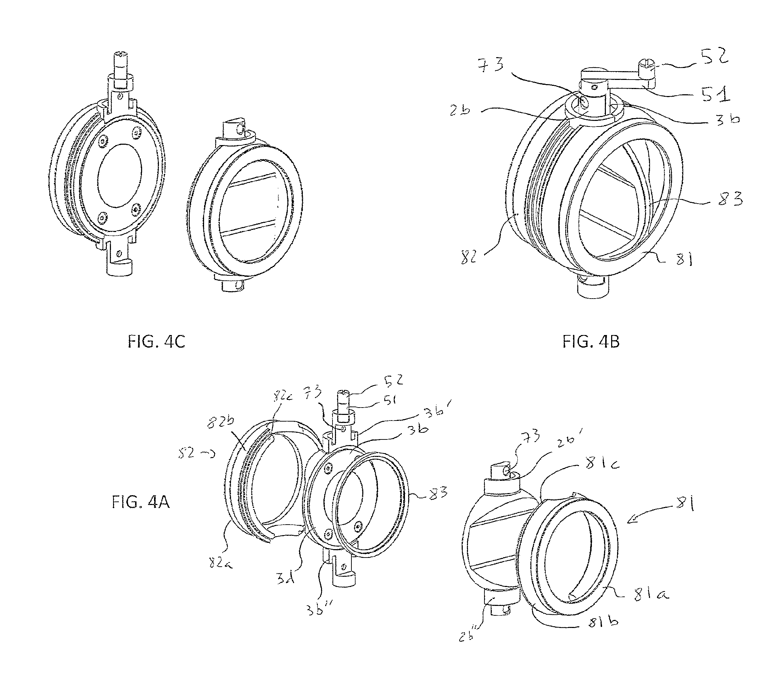

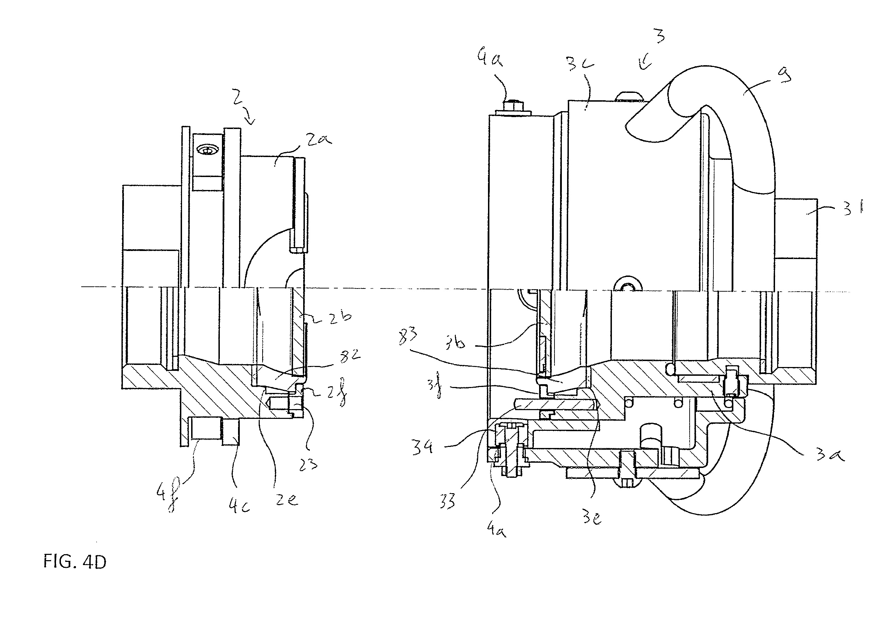

Figures 1 to 3 are sectional side views of the coupling device 1 of the present invention, for example a quick-release coupling device, in a detached state, a locked state and an opened valve state, respectively. More particularly, figure 1 shows a coupling device 1 comprising a first portion 2 and a second portion 3 in a detached state. Although not shown, the first portion 2 is preferably fixed, at a rear end thereof, to a vessel, to a hose provided that the hose is fixed, or the like, and the second portion 3 is preferably attached, via a connection adapter 31 at its rear end, to a hose or the like. The first portion 2 comprises a substantially cylindrical plug body 2a and a first half butterfly valve 2b provided at a front end of the substantially cylindrical plug body 2a opposite to the rear end thereof. The second portion 3 comprises a substantially cylindrical socket body 3a, an activation sleeve 3c axially and rotatingly movably attached to the outer surface of the socket body 3a, and a second half butterfly valve 3b provided at a front end of the substantially cylindrical socket body 3a opposite to the rear end thereof. Furthermore, the second portion 3 preferably comprises a biasing spring 32 urging the activation sleeve 3c against the coupling direction, i.e. toward the rear end of the substantially cylindrical socket body 3a. As shown in figure 4D, when the first and second portion 2, 3 of the coupling are detached, the biasing spring 32 urges the activation sleeve 3c toward a recess 34 provided in the socket body 3a such that it cannot be rotated in a circumferential direction.

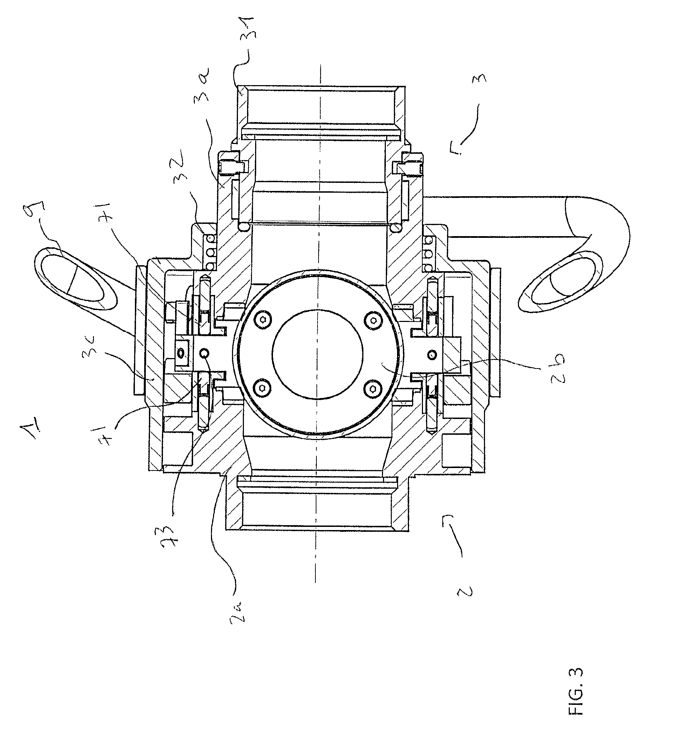

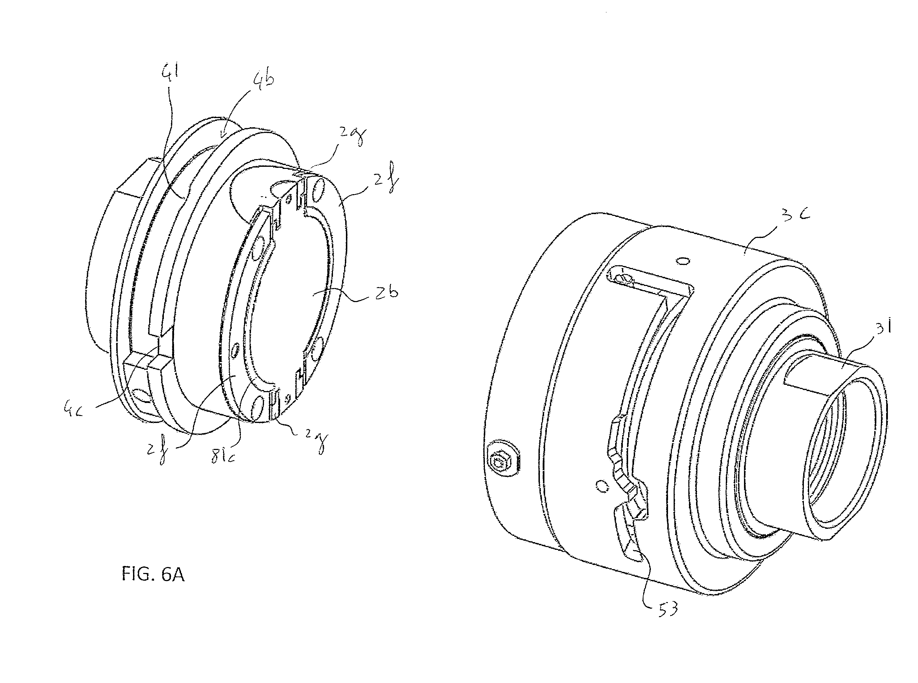

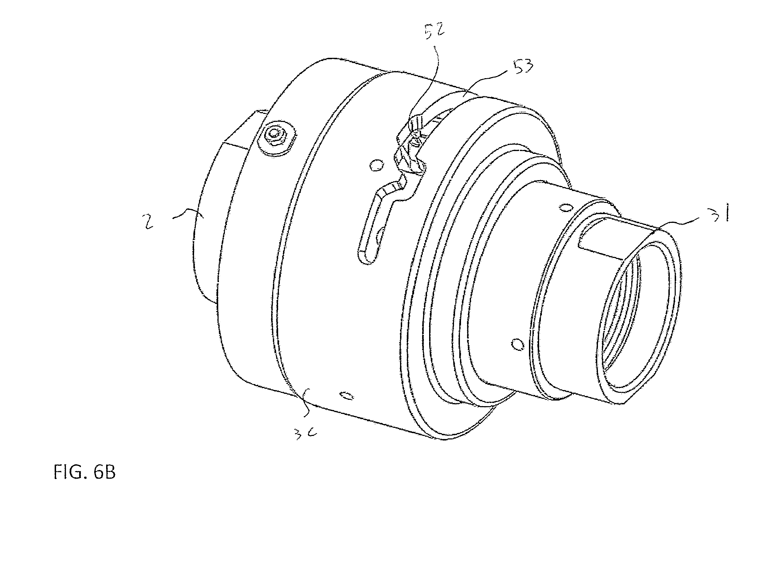

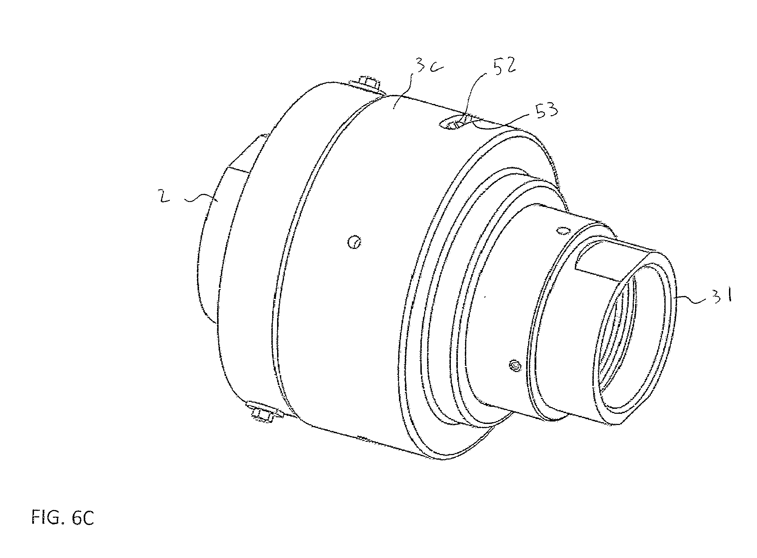

As shown, the coupling device 1 also comprises a coupling means 4, for coupling the first and the second portions 2, 3 together, which includes at least two cam followers 4a on the inner surface of the activation sleeve 3c, and a cam groove 4b on the outer surface of the substantially cylindrical plug body 2a. It is important to note that, instead of the foregoing construction, it is possible that the cam followers 4a is provided on the outer surface of the plug body 2a and that the cam groove 4b is provided on the inner surface of the activation sleeve 3c. The cam groove 4b preferably comprises at least two openings 4c (shown in figure 6A) for inserting the cam followers 4a into the cam groove 4b upon coupling of the two portions 2 and 3. Moreover, the cam groove 4b comprises a first, locking position 41 (shown in figure 6A), located for example at about 60° rotation, receiving the cam follower 4a when the two portions 2, 3 are locked, as represented in figure 2, and a second, valve-open position (not shown), located for example at about 130° rotation, beyond the first, locking position corresponding to the status in which the two coupled half-butterfly valves 2b, 3b are fully opened as represented in figure 3. Also, beyond the second, valve-open position, an abutting element (4f), shown in figure 4D, may be provided in order to stop the circumferential rotation of the sleeve 3c. The two portions 2, 3 can be coupled by axially inserting the cam followers 4a into the cam groove 4b through the groove holes 4c, and then rotating the activation sleeve 3c in a circumferential direction to the first, locking position 41.

In addition, as shown in figure 4D, one of said substantially cylindrical plug and socket bodies comprises at least one axial hole 23 and the other of said substantially cylindrical socket and plug bodies comprises at least one axial pin 33 cooperating with said at least one axial hole to correctly angularly position said first and second portions to each other.

The activation sleeve 3c further comprises a driving system 5 for pivoting the two coupled half-butterfly valves 2b, 3b upon rotation of the activation sleeve 3c beyond the first locking position 41, which will be described later in more details.

Furthermore, Figures 1 to 3 show a preferred embodiment of the invention wherein the coupling device preferably comprises a locking mechanism 7 provided for each half butterfly valve 2b, 3b. The locking mechanism 7 comprises a locking pin 71 urged by a locking spring 72 in a locking-pin hole 73 of each of the half butterfly valve 2b, 3b. When uncoupled, as shown in figure 1, each half butterfly valves 2b, 3b is locked in the closed position, preventing leakage by means of a seal to be described later, by the locking pin 71 urged forwardly from the rear to locking hole 73. Upon coupling, as shown in figure 2, valve pins 74 located inside the locking hole 73 push against each other thereby urging the locking pin 71 against the locking spring force rearwardly out of the locking hole 73 so that each half butterfly valve 2b, 3b is unlocked, i.e. able to rotate about its rotation axis into its fully open position as shown in figure 3. Thanks to this mechanism, the half butterfly valves 2b, 3b are locked into each half-butterfly valve's closed position and are not able to rotate and when the two portions 2, 3 are uncoupled in a manner sealed to the respective plug or socket body 2a, 3a, whereas the half butterfly valves 2b, 3b are unlocked from the respective plug or socket body 2a, 3a and able to rotate as soon as the two portions 2, 3 are coupled.

Figures 1-3 also show handles 9 provided on the activation sleeve 3 for driving the activation sleeve 3 upon coupling/uncoupling of the coupling device. Although handles are shown, the present invention is not limited to this feature and any type of handles, driving wheel or the same can be used.

Further, as shown in figures 1-3, according to a preferred embodiment of the invention, the substantially cylindrical socket body 3a comprises a connection adapter 31, preferably a hose connection adapter, on its rear side capable of rotating freely, but sealed to the socket body.

Figures 4A-4C show the half butterfly valves and the seals of the coupling device 1. According to a preferred embodiment, each of the first and second half butterfly valves 2b, 3b comprise two semicircular flanges 2b', 2b", 3b', 3b" (figure 4A) coaxially located around an axis of pivotation of the half butterfly valves, which is slidably inserted in a semicircular groove 2g, 3g (figure 6A) provided in the inner surface of the substantially cylindrical socket and plug bodies.

The coupling device comprises at least three seals. A first seal 81 is provided between the first half butterfly valve 2b and the plug body 2a and comprises a cylindrical part 81a, a partially spherical part 81b and a protruded part 81c. A second seal 82 is provided between the second half butterfly valve 3b and the socket body 3a and comprises a cylindrical part 82a, a partially spherical part 82b and a protruded or complementary to 81c shaped part 82c. These seals provide reliable tightness between each of the half butterfly valves and the plug and socket bodies respectively. A third circle-shaped seal 83 is provided along the periphery of one of the two half butterfly valves 2b, 3b in order to provide tightness between the two half butterfly valve upon coupling, in order to avoid entry of the transport liquid in between the two opposing faces of the two half-butterfly valves. Moreover, when the two portions 2, 3 are coupled together, the two protruded parts 81c and 82c are urged against each other in order to provide a reliable tightness. Alternatively, the two protruded parts 81c and 82c are configured such that they are corresponding with each other and, upon coupling, are fit together. With this three seals system, leaking is prevented upon coupling and uncoupling. Moreover, the third seal 83 prevents contamination of the coupling device since the two external faces of the half-butterfly valves are sealed together by the third seal such that they do not contact the fluid passing through the coupling device. In addition, in order to enhance the tightness, the cam groove 4b, beyond the locking position 41 may comprise a sloped cam surface so as to increase the closing pressure between the two portions 2, 3 such that leakage is further prevented.

The seals 81 and 82 are preferably mounted on the plug and socket bodies 2a, 3a by being stuck against a body shoulder and then maintained with a screwed plate 2f, 3f. The seal 83 is preferably mounted on one of the half-butterfly valves 2b, 3b by mechanically fixing it on a shoulder 3d. Alternatively, the seals can be fixed by gluing or any conventional method.

A fourth seal may be optionally provided at the rear end of the socket body 3a for sealing the connection between the socket body 3a and the connection adapter 31.

Now the opening and closing of the half butterfly valves and the driving system 5 will be described more in detail with reference to figures 4A-C, 5A-B and 6A-C.

According to a preferred embodiment, the driving system 5 comprises a lever 51 (figure 4A) preferably attached to the second half butterfly valve 3b at one end, and carrying a pin 52 on its other end, which is inserted in and guided by a pin-moving groove 53 (figure 6A) provided on an inner surface of the activation sleeve 3, such that upon rotation of the activation sleeve 3c beyond the first (locking) position 41, the pin 52 is guided by the pin-moving groove 53 so as to turn the lever 51 and pivot the two-half valves 2b, 3b into an open position.

It is to be noted that in the presentation of figures 4A and 4C, which show a preferred embodiment of the invention, pin 52 and lever 51 are represented in an angular view along a longitudinal axis of lever 51, so that pin 52 seems to be coaxial to the axis of pivotation of the half-butterfly valves. The representation of figure 4C clarifies this, however. According to this preferred embodiment, lever 51 is horizontally deviated by an angle of about 45° from the longitudinal direction of the coupling device (the coupling direction), however, the present invention is not limited to this preferred embodiment.

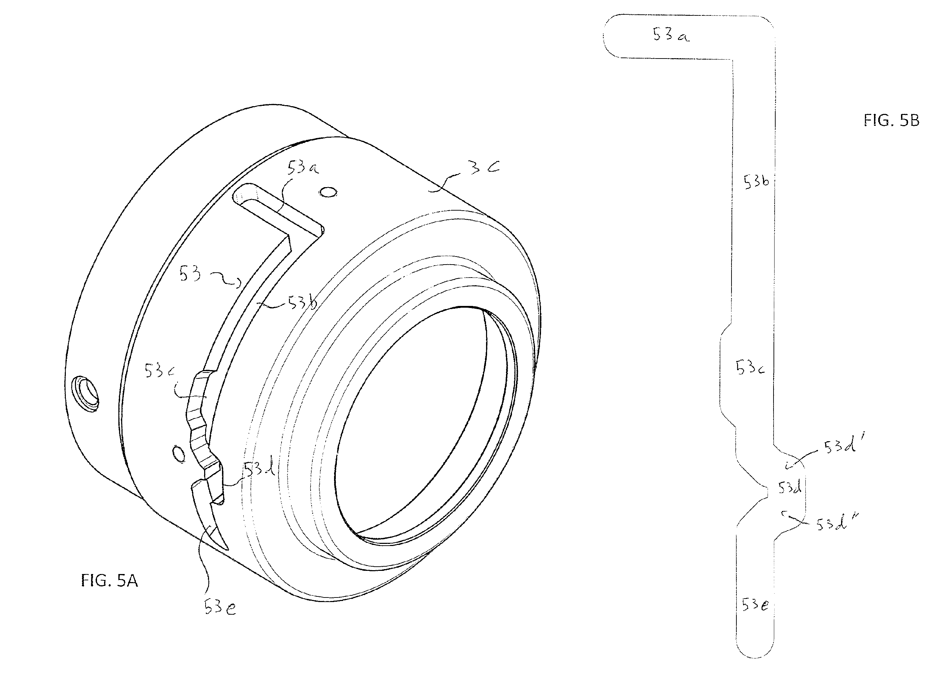

Figure 5A shows a detailed perspective view of the activation sleeve 3c. The activation sleeve 3c comprises a pin-moving groove 53 which can extend through the entire thickness of the activation sleeve, as represented, or only partially. The pin-moving groove 53 receives therein the pin 52 of the driving system 5 in order to drive the pin along the pin-moving groove 53 upon rotation of the activation sleeve along the circumference of the substantially cylindrical socket body. Figure 5B is a schematical view of the pin-moving groove 53. The pin-moving groove 53 comprises a first axial part 53a along which the pin is kept unchanged while guided when the activation sleeve is pushed against the biasing spring 32 in the axial direction in order to insert the cam followers 4a into the groove 4b through the holes 4c. Then the pin-moving groove 53 comprises a second circumferential portion 53b and extends at a 90° angle such that the pin 52 is kept substantially unchanged upon further rotation of the activation sleeve until a first recessed portion 53c corresponding to the locked position 41 of the cam groove 4b is reached. After this locked position 53c, the pin-moving groove 53 extends along a protrusion according to a substantially looped shape to form a looped shape portion 53d made of a first half 53d' and a second half 53d", wherein the pin 52 is guided by the pin-moving groove so as to turn the lever 51 about the axis of rotation of the two coupled half valves which therefore pivot by, for example 90° compared to the fully closed position, to a fully open position of the two coupled half valves. According to a preferred embodiment, the lever 51 is oriented in a direction such that it is parallel to the longitudinal direction of the coupling device when the pin 52 reaches the middle of the looped part 53d that is the rear-most portion of the protrusion. Once the two coupled half-butterfly valves (2b, 3b) are fully open, the pin is guided in straight part 53e of the pin-moving groove 53 such that the pin is kept unchanged in this part. It is important to note that part 53e while represented in all figures is optional and that rotation of the sleeve may be ended once the pin 52 has reached the end of part 53d.

More particularly, according to a preferred embodiment, when the pin 52 reaches the first half 53d' of the looped shape portion 53d, the lever 51 is still directed in a direction away from the coupling direction, for example +45°. While the pin is guided in the first half portion 53d', the lever 51 is turned such that when the pin 52 reaches the middle of the looped part 53d that is the rear-most portion of the protrusion, the lever 51 is parallel to the coupling direction, i.e. 0° with respect to the coupling direction, and while the pin 52 is guided in the second half portion 53d", the lever is further turned until it reaches the angle of -45° such that it will have pivoted by 90° thereby fully opening the two coupled half-butterfly valves. This specific example is obviously not limiting the invention. The angular orientation of the lever may differ from +45° when in the closed position provided that the pin-moving groove 53, and more particularly the portion 53d of the pin-moving groove, has a shape adapted to fully open to two coupled half butterfly valves upon rotation of the activation sleeve. Alternatively, the transmission between the half butterfly valve 2b, 3b and the sleeve 3c can also be realized by a conical gear (not shown) engaging a curved rack (not shown) designed or fixed on the inner surface of the activation sleeve 3c.

With this coupling device, it is therefore possible to couple two elements quickly and reliably, since, it is possible to first couple the two coupling portions and subsequently open the two-half valves with a single continuous rotation of the activation sleeve, and thereby simultaneously seal the two coupling portions as well as the two coupled half-butterfly valves thereby providing a reliable connection between a hose and a vessel, for example. Another advantage is that, while coupled, the coupling device may act as an opening or closing valve only.

While the present description discloses specific embodiments of the present invention, it intended that the scope of the present invention is defined by the claims enclosing all obvious variations of the present invention.

### Industrial applicability

The present invention relates to a coupling device for coupling, for example, a vessel equipped with the first coupling portion 2 and a hose freely rotatably connected to the second coupling portion 3. However, the present invention can also be applied to any other kind of connection, for example two hoses. Also, whereas the present invention has been realized for a liquid transfer, it may very well apply for transfer of any other kind of fluid.

## Claims

1. A coupling device (1) made of a first coupling portion (2) and a second coupling portion (3) adapted to be detachably coupled with each other, wherein:
said first coupling portion (2) comprises a substantially cylindrical plug body (2a) and a first half-butterfly valve (2b),
said second coupling portion (3) comprises a substantially cylindrical socket body (3a), an activation sleeve (3c) movably attached to the outer surface of the substantially cylindrical socket body (3a), and a second half-butterfly valve (3b), and
said coupling device (1) further comprises
a coupling means (4), for coupling the first and the second coupling portions (2, 3) together, including at least two cam followers (4a) on one of the substantially cylindrical plug body (2a) and the activation sleeve (3c), and a cam groove (4b) on the other one of the substantially cylindrical plug body (2a) and the activation sleeve (3c), wherein said two coupling portions (2, 3) are coupled by axially inserting the at least two cam followers (4a) into the cam groove (4b) and then rotating the activation sleeve (3c) in a circumferential direction to a first, locking position (41), and
a driving system (5) for pivoting the two coupled half-butterfly valves (2b, 3b),
**characterized in that**
said coupling means (4) further comprises a second, valve-open position beyond said first, locking position (41), and
said driving system (5) pivots the two coupled half-butterfly valves (2b, 3b) upon rotation of said activation sleeve (3c) beyond said first locking position (41).

2. The coupling device according to claim 1, wherein said driving system (5) comprises a lever (51) attached to the second half-butterfly valve (3b) and a pin (52) attached to said lever, and guided by a pin-moving groove (53) provided on an inner surface of said activation sleeve (3c) such that upon rotation of said activation sleeve (3c) beyond said first locking position (41), the pin (52) is guided by the pin-moving groove (53) so as to turn the lever (51) and pivot the two coupled half-butterfly valves (2b, 3b) into an open position.

3. The coupling device according to claim 1 or 2, wherein each half butterfly valve comprises a locking mechanism (7), said locking mechanism (7) comprising a locking pin (71) urged by a locking spring (72) in a locking hole (73) of the half butterfly valve (2b, 3b) into a position in which each of said half-butterfly valves (2b, 3b) sealingly closes the respective one of said first and second coupling portions (2, 3), wherein when coupled, each half butterfly valve (2b, 3b) is unlocked by a respective valve pin (74) urging said locking pin (71) against said spring force out of said locking hole (73).

4. The coupling device according to any one of claims 1-3, wherein in the coupling means, said at least two cam followers (4a) is located on an inner surface of the activation sleeve (3c) and the cam groove (4b) is provided on the outer surface of the substantially cylindrical plug body (2a).

5. The coupling device according to any one of claims 1-4, wherein said activation sleeve (3c) is urged away from said first coupling portion (2) by a biasing spring (32).

6. The coupling device according to claim 5, when the first and second portion (2, 3) of the coupling device (1) are detached, the biasing spring (32) urges the activation sleeve (3c) toward a recess (34) provided in the socket body (3a) such that it cannot be rotated in a circumferential direction.

7. The coupling device according to any one of claims 1-6, wherein said coupling device (1) is a quick-release coupling device capable of being operated with a single movement.

8. The coupling device according to any one of claims 1-7, wherein said substantially cylindrical socket body (3a) comprises a connection adapter (31) on its rear side, capable of rotating freely, in a manner sealed to said substantially cylindrical socket body (3a).

9. The coupling device according to claim 8, wherein said connection adapter (31) is a hose connection adapter.

10. The coupling device according to any one of claims 1-9, wherein one of said substantially cylindrical plug and socket bodies (2a, 3a) comprises at least one axial hole (23) and the other of said substantially cylindrical socket and plug bodies (3a, 2a) comprises at least one axial pin (33) cooperating with said at least axial hole (22) to correctly angularly position said first and second coupling portions (2, 3) upon rotation.

11. The coupling device according to any one of claim 1-10, wherein the cam groove (4b), beyond the first, locking position (41), comprises a sloped cam surface so as to increase the closing pressure between the two coupling portions (2, 3) upon rotation.

12. The coupling device according to any one of claims 1-11, further comprising at least a first seal 81, made of a cylindrical part 81a, a partially spherical part 81b and a protrusion part 81c, provided between the first half butterfly valve (2b) and the substantially cylindrical plug body (2a), a second seal 82, made of a cylindrical part 82a, a partially spherical part 82b and a protrusion part 82c, provided between the second half butterfly valve (3b) and the substantially cylindrical socket body (3a), and a third circle-shaped seal (83) is provided along the periphery of one of the two half-butterfly valves (2b, 3b) such that upon coupling of the two half-butterfly valves (2b, 3b), their external faces are hermetically separated from the fluid passage.

13. The coupling device according to any one of claims 1-12, further comprising handles (9) on the activation sleeve (3c).

14. The coupling device according to any one of claims 1-13, wherein when fully opened, said two coupled half-butterfly valves (2b, 3b) are pivoted at 90° compared to its closed position.

15. The coupling device according to any one of claims 1-14, wherein each of said first and second half butterfly valves (2b, 3b) comprise two semicircular flanges (2b', 2b" , 3b', 3b") coaxially located around an axis of pivotation of said half butterfly valve (2b, 3b), which is slidably inserted in two semicircular groove (2g, 3g) provided in the inner surface of said substantially cylindrical socket and plug bodies (2a, 3a).
